# EUROPEAN PATENT SPECIFICATION

(11) **EP 3 894 689 B1**
(45) Date of publication and mention of the grant of the patent: **24.01.2024**
(21) Application number: 18829669.3
(22) Date of filing: 11.12.2018
(51) Int. Cl.: F03D 1/06

(54) **SEGMENTED ROTOR BLADE HAVING MAXIMIZED OVERALL PRE-BEND VIA AN INCREASED PRE-BEND IN A BLADE TIP SEGMENT THEREOF**
SEGMENTIERTE ROTORSCHAUFEL MIT MAXIMIERTER GESAMTVORBIEGUNG DURCH EINE ERHÖHTE VORBIEGUNG IN EINEM SCHAUFELSPITZENSEGMENT DAVON
PALE DE ROTOR SEGMENTÉE AYANT UNE PRÉ-COURBURE GLOBALE MAXIMISÉE PAR L'INTERMÉDIAIRE D'UNE PRÉ-COURBURE ACCRUE DANS SON SEGMENT DE POINTE DE PALE

(43) Date of publication of application: 20.10.2021
(73) Proprietor: General Electric Renovables España, S.L., 08005 Barcelona (ES)
(72) Inventor: HUTH, Scott Jacob, Greenville, South Carolina 29615 (US); RODWELL, Andrew Mitchell, Greenville, South Carolina 29615 (US); MERZHAEUSER, Thomas, 85748 Garching b. München (DE)
(74) Representative: COPA Copenhagen Patents
(86) International application number: PCT/US2018/064851
(87) International publication number: WO 2020/122869

(56) References cited:
- EP-A1- 1 953 383
- WO-A1-2013/092871
- WO-A1-2018/215457
- JP-A- 2017 040 250
- US-A1- 2018 274 521

## Description

### FIELD

The present disclosure relates generally to wind turbines, and more particularly to segmented rotor blades for wind turbines having a maximized pre-bend via an increased pre-bend in the blade tip segment thereof.

### BACKGROUND

Wind power is considered one of the cleanest, most environmentally friendly energy sources presently available, and wind turbines have gained increased attention in this regard. A modem wind turbine typically includes a tower, a generator, a gearbox, a nacelle, and a rotor having a rotatable hub with one or more rotor blades. The rotor blades capture kinetic energy of wind using known airfoil principles. The rotor blades transmit the kinetic energy in the form of rotational energy so as to turn a shaft coupling the rotor blades to a gearbox, or if a gearbox is not used, directly to the generator. The generator then converts the mechanical energy to electrical energy that may be deployed to a utility grid.

The rotor blades generally include a suction side shell and a pressure side shell typically formed using molding processes that are bonded together at bond lines along the leading and trailing edges of the blade. Further, the pressure and suction shells are relatively lightweight and have structural properties (e.g., stiffness, buckling resistance and strength) which are not configured to withstand the bending moments and other loads exerted on the rotor blade during operation. Thus, to increase the stiffness, buckling resistance and strength of the rotor blade, the body shell is typically reinforced using one or more structural components (e.g. opposing spar caps with a shear web configured therebetween) that engage the inner pressure and suction side surfaces of the shell halves. The spar caps and/or shear web may be constructed of various materials, including but not limited to glass fiber laminate composites and/or carbon fiber laminate composites.

As wind turbines continue to increase in size, the rotor blades also increase in size. Thus, larger rotor blades may be constructed in segments that can be assembled on site via one or more pin joints. Increasing the blade length requires additional blade support because gravity pulls along the increased length to create a larger bending moment than in shorter rotor blades.

In addition, wind turbine rotor blades typically have a pre-bend in the flap-wise direction to ensure that the rotor blade does not contact the tower under loading. As such, the spar caps are primarily sized to prevent the rotor blade from contacting the tower. More specifically, the spar cap thickness of the rotor blade is often sized to meet tower clearance requirements. However, the mass of the rotor blades (which is desired to be as low as possible) is driven by the mass of the structural spar caps.

For a typical single-piece rotor blade, the amount of pre-bend is dictated due to shipping limits of the blade itself. More specifically, a rotor blade during transport must be oriented to fit within certain transportation limitations, such as a maximum height of transport and a minimum clearance to the ground. Therefore, such requirements potentially limit the amount of pre-bend in the rotor blade. However, a jointed rotor blade (specifically the tip segment of the blade) is not bound to the same transportation limitations as the blade tip segment is generally much shorter than the remaining portion of the blade.

Accordingly, the present disclosure is directed to blade tip segments for jointed rotor blades having an increased pre-bend so as to maximize the overall or overall pre-bend in the rotor blade so as to allow for lighter and less expensive spar caps. Prior art examples are disclosed in WO2018215457A1 and EP1953383A1.

### BRIEF DESCRIPTION

Aspects and advantages of the invention will be set forth in part in the following description, or may be obvious from the description, or may be learned through practice of the invention.

In one aspect, the present disclosure is directed to a rotor blade for a wind turbine. The rotor blade includes a first blade segment and a second blade segment extending in opposite directions from a chord-wise joint. Each of the first and second blade segments has at least one shell member defining an airfoil surface and an internal support structure. The first blade segment defines a first pre-bend in a flap-wise direction. The second blade segment defines a different, second pre-bend in the flap-wise direction. Further, the first pre-bend is greater than the second pre-bend. In addition, the first and second pre-bends provide an overall pre-bend in the flap-wise direction away from a tower of the wind turbine that allows for a predetermined deflection of the rotor blade towards the tower.

In one embodiment, the first pre-bend may be greater than about 3 meters. More specifically, in one embodiment, the first pre-bend of the first blade segment may be greater than about 4 meters. In another embodiment, the second pre-bend of the second blade segment may be less than about 2 meters. As such, in certain embodiments, the overall pre-bend of the rotor blade may range from about 4 meters to about 6 meters. In another embodiment, the predetermined deflection of the rotor blade towards the tower may be greater than an allowed deflection for a non-jointed rotor blade, such as greater than about 5% of the total length of the rotor blade.

In further embodiments, due to the increased first pre-bend, a weight of the internal support structures of the first and second blade segments may be less than a weight of an internal support structure for the non-jointed rotor blade, such as a weight reduction of from about 1% to about 10% as compared to non-jointed rotor blades. In addition, the location of the weight (i.e. the mass moment) may also change which is further advantageous).

In additional embodiments, the chord-wise joint may be located from about 70% to about 90% of a span of the rotor blade from a blade root thereof, such as at about 85% span of the rotor blade from the blade root. In addition, in such embodiments, the first blade segment may correspond to a blade tip segment of the rotor blade, whereas the second blade segment may correspond to a blade root segment of the rotor blade.

In several embodiments, the first blade segment may include a beam structure having a receiving end with at least one span-wise extending pin extending therefrom. The second blade segment may include a receiving section that receives the beam structure of the first blade segment. The receiving section includes a chord-wise member having a pin joint slot defined therethrough. As such, the pin joint slot receives the span-wise extending pin at the receiving end of the beam structure so as to secure the first and second blade segments together.

In another aspect, the present disclosure is directed to a method of maximizing an overall blade pre-bend of a rotor blade. The method includes providing a first blade segment defining a first pre-bend in a flap-wise direction. The method also includes providing a second blade segment defining a different, second pre-bend in the flap-wise direction. Further, the first pre-bend is greater than the second pre-bend. Moreover, the method includes securing the first and second blade segments together in opposite directions from a chord-wise joint such that the first and second pre-bends provide an overall pre-bend in the flap-wise direction away from a tower of the wind turbine that allows for a predetermined deflection of the rotor blade towards the tower.

In one embodiment, as mentioned, the first blade segment may include a beam structure having a receiving end with at least one span-wise extending pin extending therefrom. The second blade segment may include a receiving section that receives the beam structure of the first blade segment. The receiving section includes a chord-wise member having a pin joint slot defined therethrough. In such embodiments, securing the first and second blade segments together in opposite directions from the chord-wise joint may include inserting the beam structure of the first blade segment into the receiving section of the second blade segment and securing the span-wise extending pin of the receiving end of the beam structure within the pin joint slot of the receiving section. It should be understood that the method may further include any of the additional features and/or steps as described herein.

In yet another aspect, the present disclosure is directed to a rotor blade for a wind turbine. The rotor blade includes a first blade segment and a second blade segment extending in opposite directions from a chord-wise joint. Each of the first and second blade segments include at least one shell member defining an airfoil surface and an internal support structure. Further, the first blade segment defines a first pre-bend in a flap-wise direction. The second blade segment is absent of a pre-bend in the flap-wise direction such that the first pre-bend defines an overall pre-bend in the flap-wise direction away from a tower of the wind turbine that allows for a predetermined deflection of the rotor blade towards the tower. It should be understood that the rotor blade may further include any of the additional features as described herein.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of one embodiment of a wind turbine according to the present disclosure;
FIG. 2 illustrates a plan view of one embodiment of a rotor blade having a first blade segment and a second blade segment according to the present disclosure;
FIG. 3 illustrates a perspective view of a section of one embodiment of the first blade segment according to the present disclosure;
FIG. 4 illustrates a perspective view of one embodiment of a section of the second blade segment at the chord-wise joint according to the present disclosure;
FIG. 5 illustrates an assembly of one embodiment of the rotor blade of the wind turbine having the first blade segment joined with the second blade segment according to the present disclosure;
FIG. 6 illustrates an exploded perspective view of one embodiment of the multiple supporting structures of the assembly of the rotor blade of the wind turbine according to the present disclosure;
FIG. 7 illustrates a side view of one embodiment of a wind turbine according to the present disclosure, particularly illustrating a segmented rotor blade having a pre-bend;
FIG. 8 illustrates a detailed, side view of the segmented rotor blade of FIG. 7;
FIG. 9 illustrates another detailed, side view of the segmented rotor blade according to the present disclosure; and
FIG. 10 illustrates a flow chart of one embodiment of a method of maximizing an overall blade pre-bend of a rotor blade according to the present disclosure.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention as defined by the appended claims.

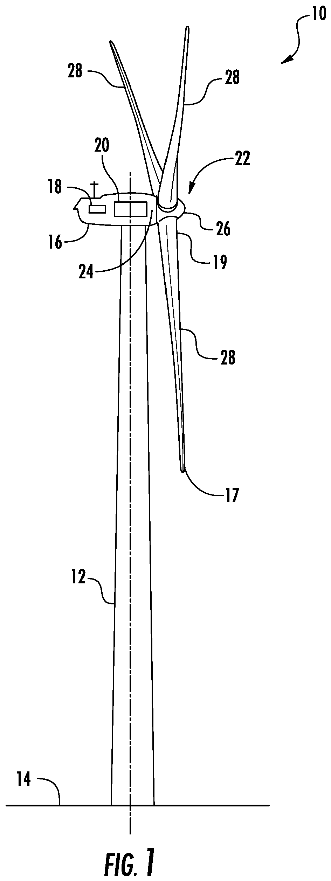

Referring now to the drawings, FIG. 1 illustrates a perspective view of one embodiment of a wind turbine 10 according to the present invention. In the illustrated embodiment, the wind turbine 10 is a horizontal-axis wind turbine. Alternatively, the wind turbine 10 may be a vertical-axis wind turbine. In addition, as shown, the wind turbine 10 may include a tower 12 that extends from a support surface 14, a nacelle 16 mounted on the tower 12, a generator 18 positioned within the nacelle 16, a gearbox 20 coupled to the generator 18, and a rotor 22 that is rotationally coupled to the gearbox 20 with a rotor shaft 24. Further, as shown, the rotor 22 includes a rotatable hub 26 and at least one rotor blade 28 coupled to and extending outward from the rotatable hub 26. As shown, the rotor blade 28 includes a blade tip 17 and a blade root 19.

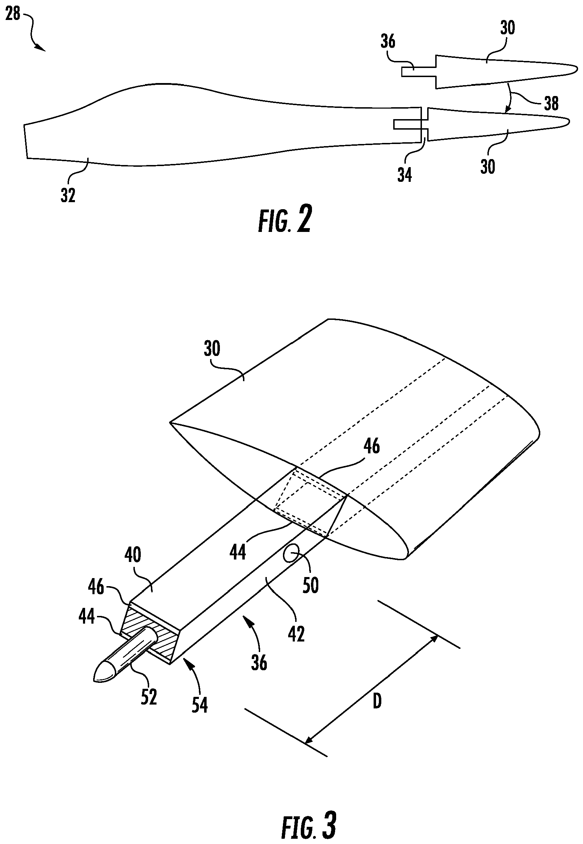

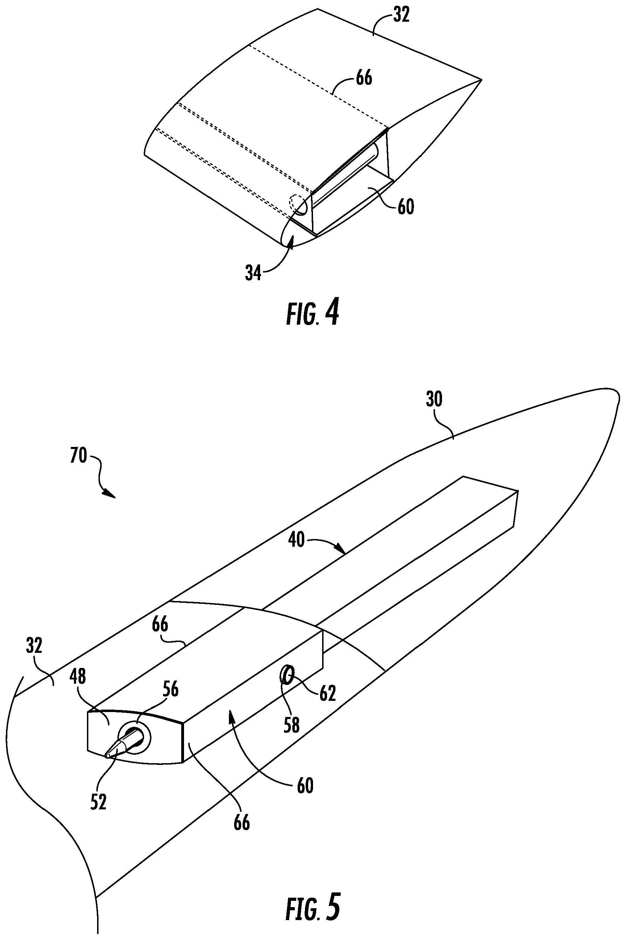

Referring now to FIG. 2, a plan view of one of the rotor blades 28 of FIG. 1 is illustrated. As shown, the rotor blade 28 may include a first blade segment 30 and a second blade segment 32. Further, as shown, the first blade segment 30 and the second blade segment 32 may each extend in opposite directions from a chord-wise joint 34. In addition, as shown, each of the blade segments 30, 32 may include at least one shell member, such as a pressure side shell member, a suction side shell member, a leading edge shell member, a trailing edge shell member and so on. The first blade segment 30 and the second blade segment 32 are connected by at least an internal support structure 36 extending into both blade segments 30, 32 to facilitate joining of the blade segments 30, 32. The arrow 38 shows that the segmented rotor blade 28 in the illustrated example includes two blade segments 30, 32 and that these blade segments 30, 32 are joined by inserting the internal support structure 36 into the second blade segment 32. In addition, as shown, the second blade segment includes multiple spar structures 66 (also referred to herein as spar caps) that extend lengthwise for connecting with the beam structure 40 of the first blade segment 30 (which is shown in more detail in FIGS. 3 and 5).

Referring now to FIG. 3, a perspective view of a section of the first blade segment 30 according to the present disclosure is illustrated. As shown, the first blade segment 30 includes a beam structure 40 that forms a portion of the internal support structure 36 and extends lengthwise for structurally connecting with the second blade segment 32. Further, as shown, the beam structure 40 forms at least a part of a shear web 42 connected with a suction side spar cap 44 and a pressure side spar cap 46. Moreover, as shown, the first blade segment 30 may include one or more first pin joints at a receiving end 54 of the beam structure 40. In one embodiment, the pin joint may include a pin that is in a tight interference fit with a bushing. More specifically, as shown, the pin joint(s) may include one pin tube 52 located on the receiving end 54 of the beam structure 40. Thus, as shown, the pin tube 52 may be oriented in a span-wise direction, i.e. along the span or length of the rotor blade 28 which is defined along an axis that extends from the blade root to the blade tip of the rotor blade 28. Further, the first blade segment 30 may also include a pin joint slot 50 located on the beam structure 40. Moreover, as shown, the pin joint slot 50 may be oriented in a chord-wise direction, i.e. along a chord of the rotor blade 28 which is defined along an axis that extends from the leading edge to the trailing edge of the rotor blade 28.

Referring now to FIG. 4, a perspective view of a section of the second blade segment 32 according to the present disclosure is illustrated. As shown, the second blade segment 32 includes a receiving section 60 extending lengthwise within the second blade segment 32 for receiving the beam structure 40 of the first blade segment 30. Further, as shown, the receiving section 60 may include the spar structures 66 that extend lengthwise for connecting with the beam structure 40 of the first blade segment 30. In addition, as shown, the receiving section 60 may include a chord-wise member 48 having a span-wise pin joint slot 56 defined therethrough. Moreover, as shown, the receiving section 60 may include a chord-wise pin joint slot 58 defined therethrough that aligns with the pin joint slot 50 of the beam structure 40.

Referring now to FIG. 5, an assembly 70 of the rotor blade 28 having the first blade segment 30 joined with the second blade segment 32 according to the present disclosure is illustrated. As shown, the assembly 70 illustrates multiple supporting structures beneath outer shell members of the rotor blade 28 having the first blade segment 30 joined with the second blade segment 32. More specifically, as shown, the span-wise extending pin 52 of the receiving end 54 of the beam structure 40 is received within the span-wise pin joint slot 56 of the receiving section 60 so as to secure the first and second blade segments 30, 32 together.

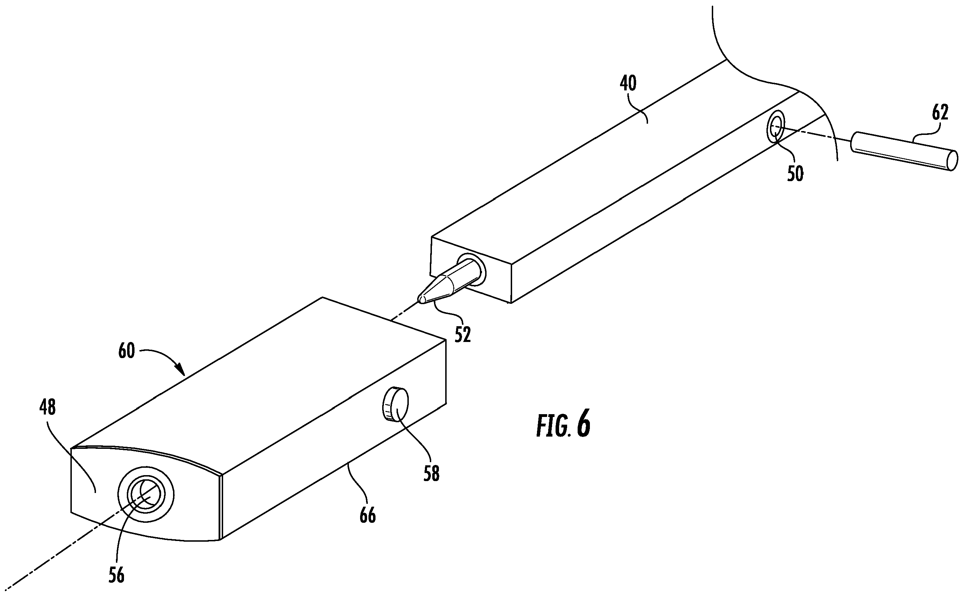

Referring now to FIG. 6, an exploded perspective view of the multiple supporting structures of the assembly 70 towards the receiving section 60 of the rotor blade 28 is illustrated. As shown, the spar structures 66 are configured to receive the beam structure 40 and may include the chord-wise pin joint slot 58 that align with the pin joint slot 50 of the beam structure 40 through which a chord-wise extending pin 62 may be inserted. Further, as shown, the chord-wise extending 62 may be configured to remain in a tight interference fit within the aligning pin joint slots 50, 58 such that spar structures 66 and the beam structure 40 are joined together during assembly. Further, FIG. 6 also illustrates the chord-wise member 48 that includes the pin joint slot 56 configured for receiving the pin tube 52 of the beam structure 40. As such, the pin tube 52 is configured to form a tight interference fit joint.

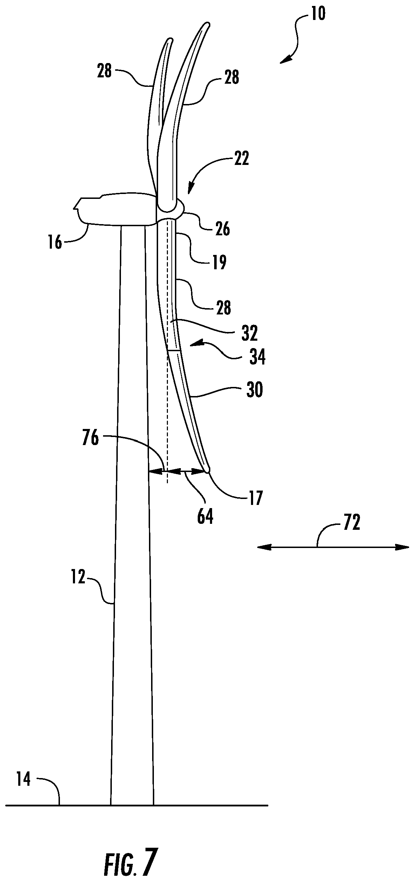

Referring now to FIG. 7, a side view of one of the rotor blades 28 secured to the hub 26 to depict an overall pre-bend 64 thereof is illustrated according to the present disclosure is illustrated. As shown, the rotor blade 28 includes the first blade segment 30 and the second blade segment 32 extending in opposite directions from the chord-wise joint 34. More specifically, as shown, the first blade segment 30 may correspond to the blade tip segment of the rotor blade 28, whereas the second blade segment 32 may correspond to a blade root segment of the rotor blade 28. In addition, as shown, the chord-wise joint 34 may be located from about 70% to about 90% of the span 78 of the rotor blade 28 from the blade root 19 thereof. For example, as shown, the chord-wise joint 34 is located at about 85% span 78 of the rotor blade 28 from the blade root 19.

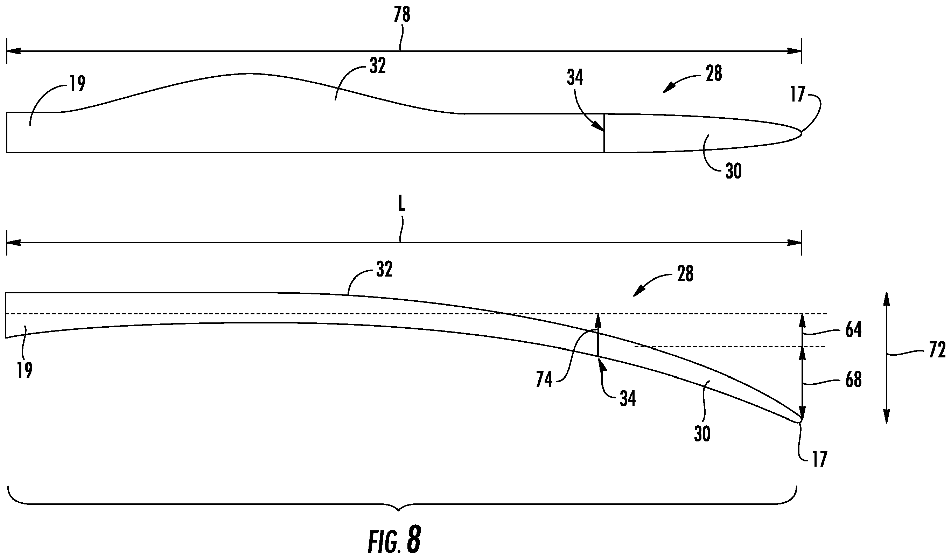

Further, as shown in FIGS. 7 and 8, the first blade segment 30 may define a first pre-bend 68 in a flap-wise direction 72 away from the tower 12 of the wind turbine 10. Moreover, as shown, the second blade segment 32 may define a different, second pre-bend 74 in the flap-wise direction 72. In addition, as shown in FIG. 8, the first pre-bend 68 may be greater than the second pre-bend 74. Thus, as shown, the first and second pre-bends 68, 74 together provide the overall pre-bend 64 in the flap-wise direction 72 away from the tower 12 that allows for a predetermined deflection 76 of the rotor blade 28 towards the tower 12. As used herein, the pre-bend of the rotor blade 28 generally refers to a bend in the blade in the flap-wise direction away from the wind turbine tower to ensure there is sufficient distance between the rotor blade and the tower during operation of the wind turbine so as to avoid collision. Therefore, the overall pre-bend 64 of the rotor blade 28 must be such that when the wind turbine 10 is subjected to wind and inertial loads, the blades 28 are straightened into their design configuration.

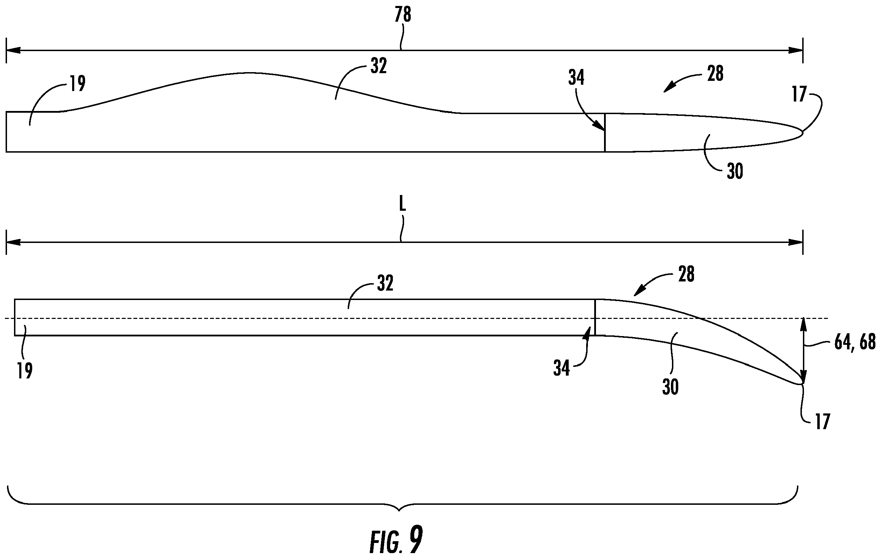

In one embodiment, the first pre-bend 68 may be greater than about 3 meters. More specifically, in one embodiment, the first pre-bend 68 of the first blade segment 30 may be greater than about 4 meters, such as about 4.5 meters. In another embodiment, the second pre-bend 74 of the second blade segment 32 may be less than about 2 meters. As such, in certain embodiments, the overall pre-bend 64 of the rotor blade 28 may range from about 4 meters to about 6 meters. In another embodiment, the predetermined deflection 76 of the rotor blade 28 towards the tower 12 may be greater than an allowed deflection for a non-jointed rotor blade, such as greater than about 5% of the total length of the rotor blade 28. In alternative embodiments, as shown in FIG. 9, the second blade segment 32 may be absent of a pre-bend in the flap-wise direction 72 (e.g. the second blade segment 32 may be straight) such that the first pre-bend 68 is equal to or defines the overall pre-bend 64 in the flap-wise direction 72 away from the tower 12 that allows for the rotor blade 28 to deflect the predetermined deflection 76 towards the tower 12.

In further embodiments, due to the increased first pre-bend 68 of the first blade segment 30, the weight of the internal support structures (e.g. such as the spar caps and shear web) of the first and second blade segments 30, 32 may be less than a weight of an internal support structure for a non-jointed rotor blade. For example, in one embodiment, the weight of rotor blades 28 of the present disclosure may be less than the weight of non-jointed rotor blades by about 1% to about 10%. In other words, due to the segmented configuration of the rotor blade 28, it is possible to have an exaggerated pre-bend in the first blade segment 30 (e.g. the blade tip segment), thereby allowing for more total deflection of the rotor blade 28. As such, since the rotor blade 28 can deflect more than a standard single-piece blade, the structural spar thickness can be decreased and the mass can also be reduced.

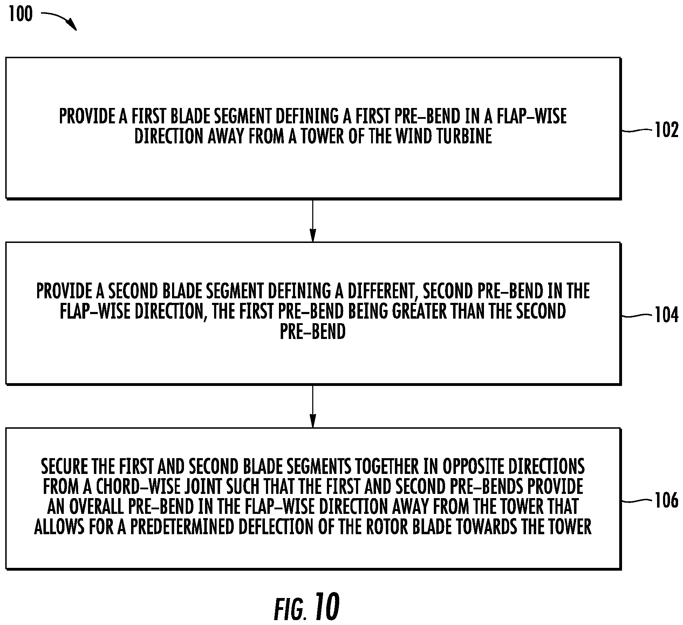

Referring now to FIG. 10, a flow chart 100 of a method of maximizing an overall blade pre-bend of a rotor blade according to the present disclosure is illustrated. In general, the method 100 will be described herein with reference to the wind turbine 10 and the rotor blade 28 shown in FIGS. 1-9. However, it should be appreciated that the disclosed method 100 may be implemented with rotor blades having any other suitable configurations. In addition, although FIG. 10 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure.

As shown at (102), the method 100 may include providing the first blade segment 30 defining the first pre-bend 68 in the flap-wise direction 72 away from the tower 12 of the wind turbine 10. As shown at (104), the method 100 may include providing the second blade segment 32 defining the different, second pre-bend 74 in the flap-wise direction 72. As shown at (106), the method 100 may include securing the first and second blade segments 30, 32 together in opposite directions from the chord-wise joint such that the first and second pre-bends 68, 74 provide the overall pre-bend 64 in the flap-wise direction 72 away from the tower 12 that allows for the predetermined deflection 76 of the rotor blade 28 towards the tower 12. For example, in one embodiment, securing the first and second blade segments 30, 32 together in opposite directions from the chord-wise joint 34 may include inserting the beam structure 40 of the first blade segment 30 into the receiving section 60 of the second blade segment 32 and securing the span-wise extending pin 52 of the receiving end 54 of the beam structure 40 within the pin joint slot 56 of the receiving section 60.

## Claims

1. A rotor blade (28) for a wind turbine (10), comprising:
a first blade segment (30) and a second blade segment (32) extending in opposite directions from a chord-wise joint (34), each of the first and second blade segments comprising at least one shell member defining an airfoil surface and an internal support structure (36),
the first blade segment defining a first pre-bend in a flap-wise direction, the second blade segment defining a different, second pre-bend in the flap-wise direction, the first and second pre-bends provide an overall pre-bend in the flap-wise direction away from a tower of the wind turbine that allows for a predetermined deflection of the rotor blade towards the tower (12), **characterized in that** the first blade segment (30) is a blade tip segment and **in that** the first pre-bend (68) is greater than the second pre-bend (74).

2. The rotor blade of claim 1, wherein the first pre-bend of the first blade segment is greater than 3 meters.

3. The rotor blade of any of the preceding claims, wherein the first pre-bend of the first blade segment is greater than 4 meters.

4. The rotor blade of any of the preceding claims, wherein the second pre-bend of the second blade segment is less than 2 meters.

5. The rotor blade of any of the preceding claims, wherein the overall pre-bend of the rotor blade ranges from 4 meters to 6 meters.

6. The rotor blade of any of the preceding claims, wherein the predetermined deflection of the rotor blade towards the tower is greater than an allowed deflection for a non-jointed rotor blade.

7. The rotor blade of any of the preceding claims, wherein a weight of the internal support structures of the first and second blade segments is less than a weight of an internal support structure for the non-jointed rotor blade.

8. The rotor blade of any of the preceding claims, wherein the chord-wise joint is located from 70% to 90% of a span of the rotor blade from a blade root thereof

9. The rotor blade of any of the preceding claims, wherein the first blade segment corresponds to a blade tip segment of the rotor blade and the second blade segment corresponds to a blade root segment of the rotor blade.

10. The rotor blade of any of the preceding claims, wherein the first blade segment comprises a beam structure having a receiving end, the receiving end comprising at least one span-wise extending pin extending therefrom, the second blade segment comprising a receiving section that receives the beam structure of the first blade segment, the receiving section comprising a chord-wise member having a pin joint slot defined therethrough, the pin joint slot receiving the span-wise extending pin at the receiving end of the beam structure so as to secure the first and second blade segments together.

11. A method of maximizing an overall blade pre-bend of a rotor blade (28), the method comprising:
providing a first blade segment (30) defining a first pre-bend in a flap-wise direction, the first blade segment being a blade tip segment;
providing a second blade segment (32) defining a second pre-bend in the flap-wise direction, the first pre-bend being greater than the second pre-bend; and,
securing the first and second blade segments together in opposite directions from a chord-wise joint (34) such that an overall pre-bend in the flap-wise direction away from the tower (12) that allows for a predetermined deflection of the rotor blade towards the tower.

12. The method of claim 11, wherein the first blade segment comprises a beam structure having a receiving end, the receiving end comprising at least one span-wise extending pin extending therefrom, the second blade segment comprising a receiving section that receives the beam structure of the first blade segment, the receiving section comprising a chord-wise member having a pin joint slot defined therethrough.

13. The method of claims 11-12, wherein securing the first and second blade segments together in opposite directions from the chord-wise joint further comprises:
inserting the beam structure of the first blade segment into the receiving section of the second blade segment; and,
securing the span-wise extending pin of the receiving end of the beam structure within the pin joint slot of the receiving section.

## Patentansprüche

1. Rotorblatt (28) für eine Windkraftanlage (10), umfassend:
ein erstes Blattsegment (30) und ein zweites Blattsegment (32), die sich in entgegengesetzten Richtungen von einer in Sehnenrichtung verlaufenden Verbindungsstelle (34) erstrecken, wobei das erste und das zweite Blattsegment jeweils mindestens ein eine Tragflächenoberfläche definierendes Schalenelement und eine interne Tragstruktur (36) umfassen, wobei das erste Blattsegment eine erste Vorbiegung in einer Schlagrichtung definiert, wobei das zweite Blattsegment eine andere, zweite Vorbiegung in der Schlagrichtung definiert, wobei die erste und die zweite Vorbiegung eine Gesamtvorbiegung in der Schlagrichtung weg von einem Turm der Windkraftanlage bereitstellen, die eine vorgegebene Auslenkung des Rotorblatts in Richtung des Turms (12) ermöglicht, **dadurch gekennzeichnet, dass** es sich bei dem ersten Blattsegment (30) um ein Blattspitzensegment handelt und dass die erste Vorbiegung (68) größer als die zweite Vorbiegung (74) ist.

2. Rotorblatt nach Anspruch 1, wobei die erste Vorbiegung des ersten Blattsegments größer als 3 Meter ist.

3. Rotorblatt nach einem der vorangehenden Ansprüche, wobei die erste Vorbiegung des ersten Blattsegments größer als 4 Meter ist.

4. Rotorblatt nach einem der vorangehenden Ansprüche, wobei die zweite Vorbiegung des zweiten Blattsegments geringer als 2 Meter ist.

5. Rotorblatt nach einem der vorangehenden Ansprüche, wobei die Gesamtvorbiegung im Bereich von 4 Metern bis 6 Metern liegt.

6. Rotorblatt nach einem der vorangehenden Ansprüche, wobei die vorgegebene Auslenkung des Rotorblatts in Richtung des Turms größer als eine zulässige Auslenkung für ein Rotorblatt ohne Verbindungsstelle ist.

7. Rotorblatt nach einem der vorangehenden Ansprüche, wobei ein Gewicht der internen Tragstrukturen des ersten und des zweiten Blattsegments geringer als ein Gewicht einer internen Tragstruktur für das Rotorblatt ohne Verbindungsstelle ist.

8. Rotorblatt nach einem der vorangehenden Ansprüche, wobei die in Sehnenrichtung verlaufende Verbindungsstelle von 70 % bis 90 % einer Spanne des Rotorblatts von einer Blattwurzel desselben liegt.

9. Rotorblatt nach einem der vorangehenden Ansprüche, wobei das erste Blattsegment einem Blattspitzensegment des Rotorblatts entspricht und das zweite Blattsegment einem Blattwurzelsegment des Rotorblatts entspricht.

10. Rotorblatt nach einem der vorangehenden Ansprüche, wobei das erste Blattsegment eine Balkenstruktur mit einem Aufnahmeende umfasst, wobei das Aufnahmeende mindestens einen sich in Spannenrichtung erstreckenden Zapfen, der sich davon erstreckt, umfasst, wobei das zweite Blattsegment einen Aufnahmeabschnitt umfasst, die die Balkenstruktur des ersten Blattsegments aufnimmt, wobei der Aufnahmeabschnitt ein in Sehnenrichtung verlaufendes Element mit einem dadurch hindurch definierten Zapfenverbindungsschlitz umfasst, wobei der Zapfenverbindungsschlitz den sich in Spannenrichtung erstreckenden Zapfen an dem Aufnahmeende der Balkenstruktur aufnimmt, um das erste und das zweite Blattsegment aneinander zu befestigen.

11. Verfahren zum Maximieren einer Gesamtvorbiegung eines Rotorblatts (28), wobei das Verfahren Folgendes umfasst:
Bereitstellen eins ersten Blattsegments (30), das eine erste Vorbiegung in einer Schlagrichtung definiert, wobei es sich bei dem ersten Blattsegment um ein Blattspitzensegment handelt;
Bereitstellen eines zweiten Blattsegments (32), das eine zweite Vorbiegung in der Schlagrichtung definiert, wobei die erste Vorbiegung größer als die zweite Vorbiegung ist; und
Befestigen des ersten und des zweiten Blattsegments aneinander in entgegengesetzten Richtungen von einer in Sehnenrichtung verlaufenden Verbindungsstelle (34), sodass eine Gesamtvorbiegung in der Schlagrichtung weg von dem Turm (12) eine vorgegebene Auslenkung des Rotorblatts in Richtung des Turms ermöglicht.

12. Verfahren nach Anspruch 11, wobei das erste Blattsegment eine Balkenstruktur mit einem Aufnahmeende umfasst, wobei das Aufnahmeende mindestens einen sich in Spannenrichtung erstreckenden Zapfen, der sich davon erstreckt, umfasst, wobei das zweite Blattsegment einen Aufnahmeabschnitt umfasst, der die Balkenstruktur des ersten Blattsegments aufnimmt, wobei der Aufnahmeabschnitt ein in Sehnenrichtung verlaufendes Element umfasst, das einen dadurch hindurch definierten Zapfenverbindungsschlitz aufweist.

13. Verfahren nach Ansprüchen 11-12, wobei das Befestigen des ersten und des zweiten Blattsegments aneinander in entgegengesetzten Richtungen von der in Sehnenrichtung verlaufenden Verbindungsstelle ferner Folgendes umfasst:
Stecken der Balkenstruktur des ersten Blattsegments in den Aufnahmeabschnitt des zweiten Blattsegments; und
Befestigen des sich in Spannenrichtung erstreckenden Zapfens des Aufnahmeendes der Balkenstruktur in dem Zapfenverbindungsschlitz des Aufnahmeabschnitts.

## Revendications

1. Pale de rotor (28) pour une éolienne (10), comportant :
un premier segment de pale (30) et un deuxième segment de pale (32) s'étendant dans des directions opposées depuis un joint allant dans le sens de la corde (34), chacun des premier et deuxième segments de pale comportant au moins un élément formant coque définissant une surface à profil aérodynamique et une structure de support interne (36),
le premier segment de pale définissant une première pré-courbure dans une direction perpendiculaire au plan du rotor, le deuxième segment de pale définissant une deuxième pré-courbure différente dans la direction perpendiculaire au plan du rotor, les première et deuxième pré-courbures procurent une pré-courbure d'ensemble dans la direction perpendiculaire au plan du rotor à l'opposé d'une tour de l'éolienne qui tient compte d'un déplacement prédéterminé de la pale de rotor vers la tour (12), **caractérisée en ce que** le premier segment de pale (30) est un segment de bout de pale et **en ce que** la première pré-courbure (68) est supérieure à la deuxième pré-courbure (74).

2. Pale de rotor selon la revendication 1, dans laquelle la première pré-courbure du premier segment de pale est supérieure à 3 mètres.

3. Pale de rotor selon l'une quelconque des revendications précédentes, dans laquelle la première pré-courbure du premier segment de pale est supérieure à 4 mètres.

4. Pale de rotor selon l'une quelconque des revendications précédentes, dans laquelle la deuxième pré-courbure du deuxième segment de pale est inférieure à 2 mètres.

5. Pale de rotor selon l'une quelconque des revendications précédentes, dans laquelle la pré-courbure d'ensemble de la pale de rotor va de 4 mètres à 6 mètres.

6. Pale de rotor selon l'une quelconque des revendications précédentes, dans laquelle le déplacement prédéterminé de la pale de rotor vers la tour est supérieur à un déplacement admis pour une pale de rotor non articulée.

7. Pale de rotor selon l'une quelconque des revendications précédentes, dans laquelle un poids des structures de support internes des premier et deuxième segments de pale est inférieur à un poids d'une structure de support interne pour la pale de rotor non articulée.

8. Pale de rotor selon l'une quelconque des revendications précédentes, dans laquelle le joint allant dans le sens de la corde est situé de 70 % à 90 % d'une envergure de la pale de rotor depuis un pied de pale de celle-ci.

9. Pale de rotor selon l'une quelconque des revendications précédentes, dans laquelle le premier segment de pale correspond à un segment de bout de pale de la pale de rotor et le deuxième segment de pale correspond à un segment de pied de pale de la pale de rotor.

10. Pale de rotor selon l'une quelconque des revendications précédentes, dans laquelle le premier segment de pale comporte une structure de longeron ayant une extrémité de réception, l'extrémité de réception comportant au moins une broche s'étendant dans le sens de l'envergure qui s'étend en provenance de celle-ci, le deuxième segment de pale comportant une section de réception qui reçoit la structure de longeron du premier segment de pale, la section de réception comportant un élément allant dans le sens de la corde ayant une fente de joint de broche définie au travers de celui-ci, la fente de joint de broche recevant la broche s'étendant dans le sens de l'envergure au niveau de l'extrémité de réception de la structure de longeron de manière à assujettir les premier et deuxième segments de pale ensemble.

11. Procédé servant à maximaliser une pré-courbure d'ensemble de pale d'une pale de rotor (28), le procédé comportant les étapes consistant à :
mettre en oeuvre un premier segment de pale (30) définissant une première pré-courbure dans une direction perpendiculaire au plan du rotor, le premier segment de pale étant un segment de bout de pale ;
mettre en oeuvre un deuxième segment de pale (32) définissant une deuxième pré-courbure dans la direction perpendiculaire au plan du rotor, la première pré-courbure étant supérieure à la deuxième pré-courbure ; et
assujettir les premier et deuxième segments de pale ensemble dans des directions opposées depuis un joint allant dans le sens de la corde (34) de telle sorte qu'une pré-courbure d'ensemble dans la direction perpendiculaire au plan du rotor à l'opposé de la tour (12) tient compte d'un déplacement prédéterminé de la pale de rotor vers la tour.

12. Procédé selon la revendication 11, dans lequel le premier segment de pale comporte une structure de longeron ayant une extrémité de réception, l'extrémité de réception comportant au moins une broche s'étendant dans le sens de l'envergure qui s'étend en provenance de celle-ci, le deuxième segment de pale comportant une section de réception qui reçoit la structure de longeron du premier segment de pale, la section de réception comportant un élément allant dans le sens de la corde ayant une fente de joint de broche définie au travers de celui-ci.

13. Procédé selon les revendications 11-12, dans lequel l'étape consistant à assujettir les premier et deuxième segments de pale ensemble dans des directions opposées depuis le joint allant dans le sens de la corde comporte par ailleurs les étapes consistant à :
insérer la structure de longeron du premier segment de pale jusque dans la section de réception du deuxième segment de pale ; et
assujettir la broche s'étendant dans le sens de l'envergure de l'extrémité de réception de la structure de longeron à l'intérieur de la fente de joint de broche de la section de réception.
